# EUROPEAN PATENT SPECIFICATION

(11) **EP 2 073 437 B1**
(45) Date of publication and mention of the grant of the patent: **08.05.2013**
(21) Application number: 08021205.3
(22) Date of filing: 05.12.2008
(51) Int. Cl.: H04L 12/931, H04L 12/12, H04L 12/40

(54) **Method and system for duty cycling portions of a network device based on aggregate throughput of the device**
Verfahren und System für Arbeitszyklusportionen eines Netzwerkgeräts basierend auf dem Gesamtdurchsatz des Geräts
Procédé et système pour les portions de facteur d'utilisation d'un dispositif de réseau basé sur le débit total du dispositif

(30) Priority: 17.12.2007 US 14293 P; 17.12.2007 US 14253 P; 17.12.2007 US 14265 P; 17.12.2007 US 14278 P; 28.08.2008 US 200653
(43) Date of publication of application: 24.06.2009
(73) Proprietor: Broadcom Corporation, Irvine, CA 92617 (US)
(72) Inventor: Diab, Wael William, San Francisco, CA 94109 (US); Frazier, Howard, Pleasanton, CA 94566 (US)
(74) Representative: Jehle, Volker Armin

(56) References cited:
- US-B1- 6 856 597
- M GUPTA, S SINGH: "Dynamic Ethernet Link Shutdown for Energy Conservation on Ethernet Links" IEEE, [Online] 24 June 2007 (2007-06-24), XP002524616 Retrieved from the Internet: URL:http://ieeexplore.ieee.org/stamp/stamp .jsp?tp=&arnumber=4289690&isnumber=4288671 > [retrieved on 2009-04-21]
- WAEL WILLIAM DIAB: "Energy Efficient Ethernet and 802.1"[Online] November 2007 (2007-11), XP002524617 Atlanta, USA Retrieved from the Internet: URL:http://www.ieee802.org/3/az/public/nov 07/EEE-and-802_1v7.pdf> [retrieved on 2009-04-21]

## Description

### FIELD OF THE INVENTION

Certain embodiments of the invention relate to a method and system for networking. More specifically, certain embodiments of the invention relate to a method and system for duty cycling portions of a network device based on aggregate throughput of the device.

### BACKGROUND OF THE INVENTION

With the increasing popularity of electronics such as desktop computers, laptop computers, and handheld devices such as smart phones and PDA's, communication networks, and in particular Ethernet networks, are becoming an increasingly popular means of exchanging data of various types and sizes for a variety of applications. In this regard, Ethernet networks are increasingly being utilized to carry, for example, voice, data, and multimedia. Accordingly more and more devices are being equipped to interface to Ethernet networks.

As the number of devices connected to data networks increases and higher data rates are required, there is a growing need for new transmission technologies which enable higher data rates. Conventionally, however, increased data rates often results in significant increases in power consumption. In this regard, as an increasing number of portable and/or handheld devices are enabled for Ethernet communications, battery life may be a concern when communicating over Ethernet networks. Accordingly, ways of reducing power consumption when communicating over Ethernet networks may be needed.
US 6,856,597 B1 discloses a power budgeter controlling the rate of data flow in one or more transceivers among a plurality of transceivers. The power budgeter monitors aggregate transceiver activity (data flow) during a predefined period, and limits transceiver data transmit and receive rates during times when the aggregate transceiver activity would otherwise exceed a predefined threshold. If total data flow during the monitored time period exceeds the threshold, data flow through the active transceiver during the next (second) time period is limited. Data flow rates are limited in a transceiver by shutting off transceivers (receiver and/or transmitter) for a specified portion of the second time period. In other types of transceivers, the transmitter and/or receiver may be forced into a low-power idle state or similar operating condition for a specified portion of the second predefined time period.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for duty cycling portions of a network device based on aggregate throughput of the device, substantially as shown in and/or described in connection with at least one of the figures, as set forth more completely in the claims.

According to an aspect, a method for networking is provided, the method comprising:
determining a limit on aggregate ingress and/or egress data of a network device during a time interval; and
duty cycling processing of said ingress and/or egress data by said network device based on said determination.

Advantageously, the method further comprises powering down and/or slowing down one or more components, or portions thereof, of said network device during a portion of said time interval.

Advantageously, the method further comprises processing by said network device, said ingress and/or egress data at a first rate during a first portion of said time interval and at a second rate during a remaining portion of said time interval.

Advantageously, the method further comprises determining a duration of said time interval, said first portion of said time interval, and/or said remaining portion of said time interval based on one or more of:
a type of said ingress and/or egress data; and
said limit on aggregate ingress and/or egress data of said network device during said time interval.

Advantageously, power consumed by said network device during said first portion of said time interval is less than power consumed by said network device during said remaining portion of said time interval.

Advantageously, the method further comprises determining said first rate and said second rate based on said limit on aggregate ingress and/or egress data of said network device during said time interval.

Advantageously, an average rate at which said network device processes said ingress and/or egress data during said time interval is equal, within a tolerance, to said limit on the aggregate throughput of said network device during said time interval.

Advantageously, the method further comprises disabling processing of said ingress and/or egress data by said network device during a first portion of said time interval and enabling processing of said ingress and/or egress data by said network device during a remaining portion of said time interval.

Advantageously, said network device communicates utilizing Ethernet protocols.

Advantageously, power consumption of said network device is managed utilizing one or more Energy Efficient Ethernet techniques.

According to an aspect, a system for networking is provided, the system comprising:
one or more circuits in a network device, said one or more circuits operable to:
   determine a limit on aggregate ingress and/or egress data of said network device during a time interval; and
   duty cycle processing of said ingress and/or egress data by said network device based on said determination.

Advantageously, said one or more circuits are operable to power down and/or slow down one or more components, or portions thereof, of said network device during a portion of said time interval.

Advantageously, said one or more circuits are operable to process said ingress and/or egress data at a first rate during a first portion of said time interval and process said ingress and/or egress data at a second rate during said remaining portion of said time interval.

Advantageously, said one or more circuits are operable to determine a duration of said time interval, said first portion of said time interval, and/or said remaining portion of said time interval based on one or more of:
a type of said ingress and/or egress data; and
said limit on aggregate ingress and/or egress data of said network device during said time interval.

Advantageously, power consumed by said network device during said first portion of said time interval is less than power consumed by said network device during said remaining portion of said time interval.

Advantageously, said one or more circuits are operable to determine said first rate and said second rate based on said limit on aggregate ingress and/or egress data of said network device during said time interval.

Advantageously, an average rate at which said network device processes said ingress and/or egress data during said time interval is equal, within a tolerance, to said limit on the aggregate throughput of said network device during said time interval.

Advantageously, said network device does not process said ingress and/or egress data during a first portion of said time interval and processes said ingress and/or egress data during a remaining portion of said time interval.

Advantageously, said network device communicates utilizing Ethernet protocols.

Advantageously, power consumption of said network device is managed utilizing one or more Energy Efficient Ethernet techniques.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram illustrating an exemplary multi-port device communicatively coupled to a plurality of network devices, in accordance with an embodiment of the invention.

FIG. 1B is a block diagram illustrating an exemplary single-port device, in accordance with an embodiment of the invention.

FIG. 2A is a diagram illustrating duty cycling one or more portions of a network device based on aggregate throughput of the device, in accordance with an embodiment of the invention.

FIG. 2B is a diagram illustrating duty cycling one or more portions of a network device based on aggregate throughput of the device during a time interval, in accordance with an embodiment of the invention.

FIG. 2C is a diagram illustrating duty cycling one or more portions of a network device based on aggregate throughput of the device, in accordance with an embodiment of the invention.

FIG. 3 is a flow chart illustrating exemplary steps for configuring portions of a network device based on an aggregate throughput a plurality of network links communicatively coupled to the network device, in accordance with an embodiment of the invention.

### DETAILED DESCRIPTION OF THE INVENTION

Aspects of the invention may be found in a method and system for duty cycling portions of a network device based on aggregate throughput of the device. In various embodiments of the invention, a limit on aggregate ingress and/or egress data of a network device during a time interval may be determined. Processing of the data may be duty cycled based on the determination. The device may process the data at a first rate during a first portion of a time interval and process the data at a second rate during a remaining portion of the time interval. In this regard, one or more components, or portions thereof, of the device may be slowed or powered down during the first portion of the time interval. Exemplary components of the device 200 may comprise one or more network port subsystems, switch fabric subsystems, control and/or management subsystems, and/or hosts.

A duration of the time interval may be based on a type of the ingress and egress data. A duration of the time interval may be based on the limit on aggregate throughput of the network device during the time interval. A duration of the first portion of the time interval may be based on the limit on aggregate throughput of the network device during the time interval. Power consumed by the device during the first portion of the time interval may be less than power consumed by the device during the remaining portion of the time interval. The first data rate and the second data rate may each be determined based on the limit on aggregate ingress and egress data of the network device during the time interval. An average rate at which the device processes data during the time interval may be equal, within a tolerance, to limit on aggregate throughput of the network device during the time interval.

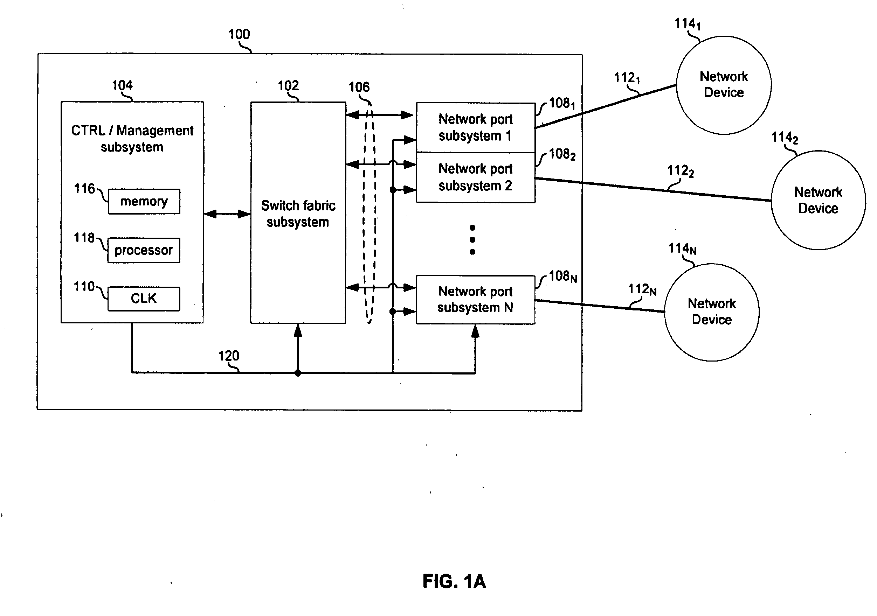

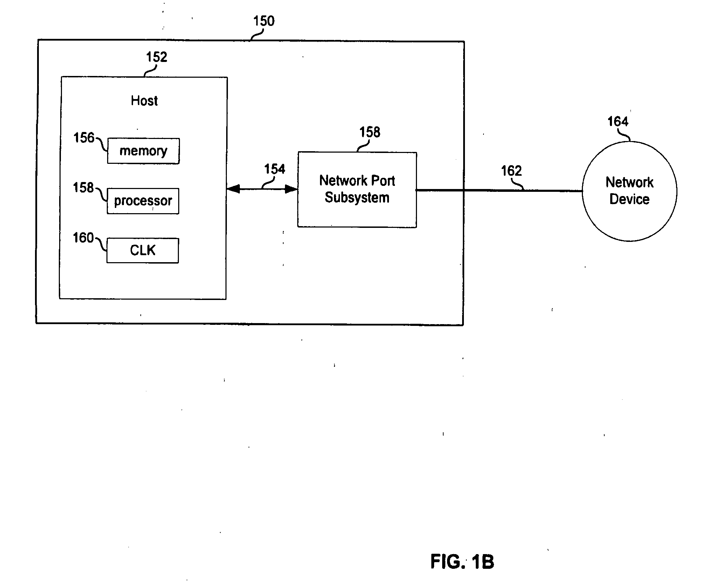

FIG. 1A is a block diagram illustrating a multi-port device communicatively coupled to a plurality of network devices, in accordance with an embodiment of the invention. Referring to FIG. 1, there is shown an N-port device 100 communicatively coupled to devices 114₁, ..., 114_{N} (collectively referred to herein as devices 114) via links 112₁, ..., 112_{N} (collectively referred to herein as links 112). The N-port device 100 may comprise a control and management subsystem 104, a switch fabric subsystem 102, and a plurality of networking port subsystems 108₁, ..., 108_{N}.

The control and management subsystem 104 may comprise suitable logic, circuitry, and/or code that may be operable to configure and/or control operations of the N-port device 100. In this regard, the control and management subsystem 104 may provide one or more control signals 120 to one or more portions of the switch fabric subsystem 102 and/or the network port subsystems 108₁, ..., 108_{N}. Additionally, the control and management subsystem 104 may comprise suitable logic, circuitry, and/or code to enable operability of layer 3, and possibly higher layers, of the OSI model. For example, in instances that the device 100 may be an edge device such as a server or a PC, the control and management subsystem 104 may process data that may be communicated over one or more of the links 112. In an exemplary embodiment of the invention, the control and management subsystem 104 may comprise a processor 118, a memory 116, and a clock 110.

The processor 118 may comprise suitable logic, circuitry, and/or code that may enable processing data and/or controlling operations of the device 100. In this regard, the processor 118 may be enabled to provide control signals 120 to the various other blocks comprising the device 100. The processor 118 may also enable execution of applications programs and/or code. In various embodiments of the invention, the applications, programs, and/or code may enable, for example, configuring the switch fabric subsystem 102 and/or network port subsystems 108₁, ..., 108_{N}. Additionally, in various embodiments of the invention, the applications, programs, and/or code may enable, for example, generating, parsing, or otherwise processing data.

The memory 116 may comprise suitable logic, circuitry, and/or code that may enable storage or programming of information that includes parameters and/or code that may effectuate the operation of the N-port device 100. The parameters may comprise configuration data and the code may comprise operational code such as software and/or firmware, but the information need not be limited in this regard. Moreover, the parameters may include adaptive filter and/or block coefficients.

The clock 110 may comprise suitable logic circuitry and/or code which may be operable to generate one or more reference signals for supporting operation of the N-port device 100. Although a single clock is illustrated in FIG. 1, the invention is not so limited and the N-port device 100 may comprise a plurality of clocks. Additionally and/or alternatively, one or more derivative clocks may be generated from the clock 110 and may be utilized by one or more portions of the N-port device 100.

The switch fabric subsystem 102 may comprise suitable logic, circuitry, and/or code that may be operable to route data between the network port subsystems 108₁, ..., 108_{N}. Additionally, in some instances, the switch fabric subsystem 102 may be operable to route data between one or more of the network port subsystems 108₁, ..., 108_{N} and the control and management subsystem 104. In various embodiments of the invention, one or more portions of the switch fabric subsystem 102 may be dedicated to one of the network port subsystems 108₁, ..., 108_{N} In various embodiments of the invention, one or more portions of the switch fabric subsystem 102 may be shared among a plurality of the network port subsystems 108₁, ..., 108_{N}. Additionally, various portions and/or resources of the switch fabric subsystem 102 may be dynamically allocated to one or more of the port subsystems 108₁, ..., 108_{N} as needed.

Each of the network port subsystems 108₁, ..., 108_{N} may comprise suitable logic, circuitry and/or code for communicating data between the switch fabric subsystem 104 and the physical links 112₁, ..., 112_{N}. In this regard, the network port subsystems 108₁, ..., 108_{N} may each enable operability of layer 1, and in some instances layer 2 or higher, of the OSI model. In an exemplary embodiment of the invention, each of the network port subsystems 108₁, ..., 108_{N} may comprise, for example, a media access control (MAC) module and a PHY device. In various exemplary embodiments of the invention, each network port subsystems 108₁, ..., 108_{N} may comprise one or more transmitters, receivers, filters, echo cancellation blocks, far-end-crosstalk cancellation blocks, and/or near-end crosstalk cancellation blocks. In an exemplary embodiment of the invention, the network port subsystems 108₁, ..., 108_{N} may communicate with the switch fabric subsystem 102 via an interface 106 which may , for example, be a PCI or PCI-X bus.

The links 112 may each comprise up to four or more physical channels and the devices 102 may communicate via two or more of the physical channels. For example, Ethernet over twisted pair standards 10BASE-T and 100BASE-TX may utilize two pairs of UTP while Ethernet over twisted pair standards 1000BASE-T and 10GBASE-T may utilize four pairs of UTP.

In operation, data processing capabilities of the N-port device 100 may be duty cycled based on aggregate throughput of the networking port subsystems 108₁, ..., 108_{N}. Accordingly, based on the aggregate throughput during a time interval, one or more portions of the N-port device 100 may be disabled, powered down, and/or operated at lower frequency for a portion of the time interval and enabled, powered up, and/or operated at higher frequency for a portion of the time interval. Aggregate throughput may refer to the sum of the data rates on the links 112₁, ..., 112_{N}. The aggregate throughput of the N-port device 100 may depend, for example, on ingress and egress traffic to/from the N-port device 100. Accordingly, one or more portions of the N-port device 100 may be duty cycled between a plurality of configurations such that data processing capacity of the N-port device 100 may match (within a tolerance or range) the amount of data to be processed for transmission and/or reception via the links 112 during the time interval. For example, one or more portions of the control and management subsystem 104, the switch fabric subsystem 102, the network port subsystems 108₁, ..., 108_{N}, may be duty cycled between a plurality of configurations. In this regard, one or more of the configurations may be a high(er) power configuration in which the device 100 may process data at a high(er) rate and one or more configurations may be a low(er) power configuration in which the device 100 may process data at a low(er) rate. In various exemplary embodiments of the invention, one or more portions of the device 100 may be placed into a "deep sleep" mode during which little or no data may be processed.

In various exemplary embodiments of the invention, 'N' may be any integer greater than or equal to 1. For example, the device 100 may be VOIP phone and 'N' may be 3, the device 100 may be a SMB switch and 'N' may be 5, the device 100 may be an Enterprise switch and 'N' may be 48, or the device may be an aggregation switch and 'N' may be 96.

In various embodiments of the invention, the devices 114 may each comprise, for example, networking devices such as personal computers, wireless local area networking (WLAN) devices, voice over internet protocols (VOIP) devices, handheld devices, servers, switches, routers, and bridges. In various embodiments of the invention, the devices 114 may each comprise, for example, A/V equipment may such as microphones, instruments, sound boards, sound cards, video cameras, media players, graphics cards, or other audio and/or video devices. Additionally, the devices 114 may each be enabled to utilize Audio/Video Bridging and/or Audio/video bridging extensions (collectively referred to herein as audio video bridging or AVB) for the exchange of multimedia content and associated control and/or auxiliary data.

In various embodiments of the invention, the N-port device 100 and/or devices 106 may each comprise suitable logic, circuitry, and/or code that may enable transmission and/or reception at a high(er) data in one direction and transmission and/or reception at a low(er) data rate in the other direction.

In various embodiments of the invention, the N-port device 100 may be enabled to utilize Audio/Video Bridging and/or Audio/video bridging extensions (collectively referred to herein as audio video bridging or AVB) for the exchange of multimedia content and associated control and/or auxiliary data.

In various exemplary embodiments of the invention, one or more of the network port subsystems 108₁, ..., 108_{N} may comprise a twisted pair PHY capable of operating at one or more standard rates such as 10Mbps, 100Mbps, 1Gbps, and 10Gbps (10BASE-T, 100GBASE-TX, 1GBASE-T, and/or 10GBASE-T); potentially standardized rates such as 40Gbps and 100Gbps; and/or non-standard rates such as 2.5Gbps and 5Gbps.

In an exemplary embodiment of the invention, one or more of the network port subsystems 108₁, ..., 108_{N} may comprise a backplane PHY capable of operating at one or more standard rates such as 10Gbps (10GBASE-KX4 and/or 10GBASE-KR); and/or non-standard rates such as 2.5Gbps and 5Gbps.

In an exemplary embodiment of the invention, one or more of the network port subsystems 108₁, ..., 108_{N} may comprise an optical PHY capable of operating at one or more standard rates such as 10Mbps, 100Mbps, 1Gbps, and 10Gbps; potentially standardized rates such as 40Gbps and 100Gbps; and/or non-standardized rates such as 2.5Gbps and 5Gbps. In this regard, the optical PHY may be a passive optical network (PON) PHY.

In addition, the link partners, one or more of the network port subsystems 108₁, ..., 108_{N} may support multi-lane topologies such as 40Gbps CR4, ER4, KR4; 100Gbps CR10, SR10 and/or 10Gbps LX4 and CX4. Also, serial electrical and copper single channel technologies such as KX, KR, SR, LR, LRM, SX, LX, CX, BX10, LX10 may be supported. Non standard speeds and non-standard technologies, for example, single channel, two channel or four channels may also be supported. More over, TDM technologies such as PON at various speeds may be supported by the N-port device 100.

In various embodiments of the invention, the device 100 may reside on one or more printed circuit boards. In this regard, one or more PCBs may be housed and/or communicatively coupled in a fixed or modular configuration. In regards to a modular, or "chassis", approach, the number and type of ports may be configurable.

FIG. 1B is a block diagram illustrating an exemplary single-port device, in accordance with an embodiment of the invention. Referring to FIG. 1B, the single-port device 150 may comprise a host 152 and a network port subsystem 158. The single-port 150 may be similar, or even the same in some cases, to the N-port device 100 described with respect to FIG. 1. In this regard, the N-port device 100 may be more illustrative of a switch, bridge, router, or other device typically found in network core, whereas the single-port device 150 may be more illustrative of a device at the network edge such as a PC or a server.

The host 152 may comprise suitable logic, circuitry, and/or code that may be operable to enable operability of layer 2 and higher of the OSI model. Additionally, the host may comprise suitable logic, circuitry, and/or code that may be operable to perform any of a variety of computing and/or data processing functions. The host 152 may comprise a processor 158, a memory 156, and a clock 160 which may be similar to the processor 118, a memory 116, and the clock 110 described with respect to FIG. 1A.

The network port subsystem 158 may be similar to or the same as one of the network port subsystems 108₁, ..., 108_{N} described with respect to FIG. 1A.

The N-port device 100 of FIG. 1 may be primarily a networking device whereas networking may be a secondary function of the device 150. In this regard, the device 150 may utilize its network capabilities to facilitate a primary function which may comprise providing data and/or services to a user. However, even though networking may be a secondary function of the device 150, duty cycling one or more portions of the device 150 based on aggregate throughput of the networking port subsystem 158 may still enable significantly reducing power consumption in the device 150. In this regard, one or more portions of the device 150 associated with the network port subsystem 158 and/or associated with networking functions of the device 150 in general, may be duty cycled between a plurality of configurations. For example, the network port subsystem 158 may communicate with the host 152 via bus 154 (e.g. 154) and traffic exchanged between the network port subsystem 158 and the host 152 may comprise a significant percentage of the transactions on the bus 154. Accordingly, in instances that less data may be communicated over the link 112, the bus 154 and/or its controllers may correspondingly be duty cycled between one or more low(er) speed configurations and one or more high(er) speed configurations. Similarly, portions of the memory 156, which may buffer data communicated between the network port subsystem 158 and the host 152, may be powered down for one or more portions of one or more time intervals during which there may be less data to be communicated between the host 152 and the network port subsystem 158.

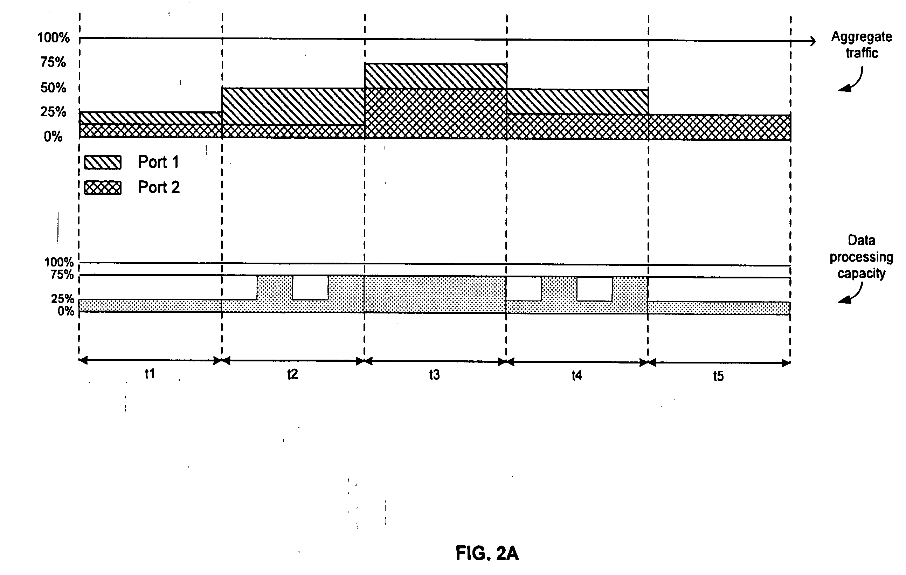

FIG. 2A is a diagram illustrating duty cycling one or more portions of a network device based on aggregate throughput of the device, in accordance with an embodiment of the invention. Referring to FIG. 2A, in an exemplary embodiment of the invention, a device may comprise two network ports and may need to process ingress and egress data for both ports. Consequently, to prevent corrupted or lost data, from overflowed or underflowed buffers, for example, the rate at which the device processes data, that is, the device's data processing capacity, may need to keep up with the combined ingress and egress data on the two ports. Accordingly, an aggregate throughput of a device's network ports may be utilized to control operation of one or more portions of the device. In this regard, one or more components, or portions thereof, of the device may be duty cycled during a time interval based on a limit on aggregate throughput of the device during the time interval.

During the exemplary time interval t1, ports 1 and 2 may combine to support up to 25% of the maximum aggregate throughput supported by a network device (M.A.T). Accordingly, one or more components, or portions thereof, of the device may be configured to handle 25% of the M.A.T for 100% of time interval t1. During the exemplary time interval t2, ports 1 and 2 may combine to support up to 50% of the M.A.T. Accordingly, one or more components, or portions thereof, of the device may be configured to handle 25% of the M.A.T for 50% of time interval t2 and configured to handle 75% of the M.A.T for 50% of time interval t2. During the exemplary time interval t3, ports 1 and 2 may combine to support up to 75% of the M.A.T. Accordingly, one or more components, or portions thereof, of the device may be configured to handle 75% of the M.A.T for 100% of time interval t3. During the exemplary time interval t4, ports 1 and 2 may combine to support up to 50% of the M.A.T. Accordingly, one or more components, or portions thereof, of the device may be configured to handle 25% of M.A.T for 50% of time interval t2 and configured to handle 75% of the M.A.T for 50% of time interval t4. During the exemplary time interval t5, ports 1 and 2 may combine to support up to 25% of the M.A.T. Accordingly, one or more components, or portions thereof, of the device may be configured to handle 25% of the M.A.T for 100% of time interval t5.

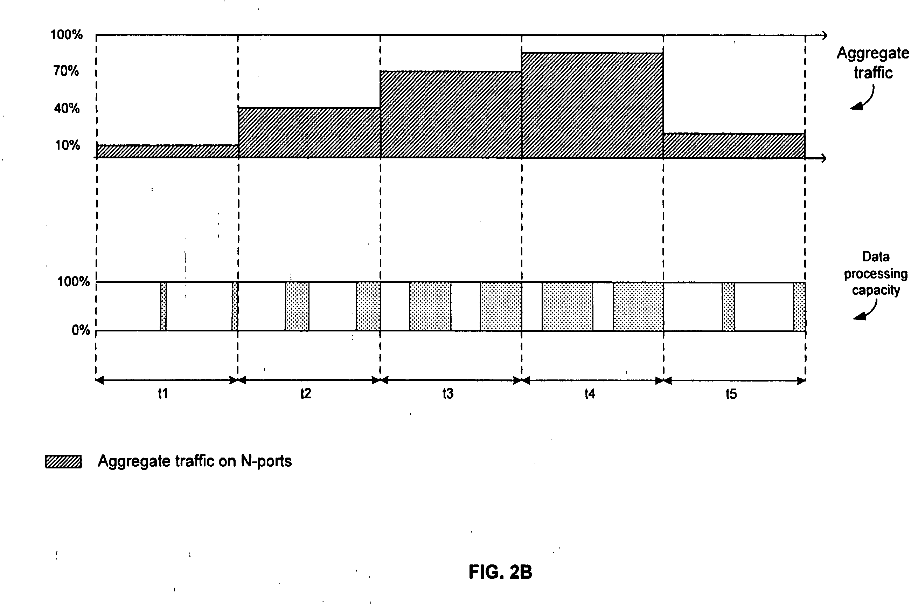

FIG. 2B is a diagram illustrating duty cycling one or more portions of a network device based on aggregate throughput of the device during a time interval, in accordance with an embodiment of the invention. Referring to FIG. 2B, in an exemplary embodiment of the invention, a device may comprise N ports which may each support a plurality of standard and/or non-standard data rates. To prevent corrupted or lost data, from overflowed or underflowed buffers, for example, the rate at which the device processes data, that is, the device's data processing capacity, may need to keep up with the combined ingress and egress data on the N ports. Accordingly, an aggregate throughput of a device's network ports may be utilized to control operation of one or more portions of the device. In this regard, one or more components, or portions thereof, of the device may be duty cycled during a time interval based on the aggregate throughput of the device during the time interval.

During the exemplary time interval t1, the N ports may combine to support up to 10% of the M.A.T. Accordingly, one or more components, or portions thereof, of the device may be configured to handle 100% of the M.A.T for 10% of time interval t1 and configured to handle 0% of the M.A.T for 90% of time interval t1. During the exemplary time interval t2, the N ports may combine to support up to 40% of the M.A.T. Accordingly, one or more components, or portions thereof, of the device may be configured to handle 100% of the M.A.T for 40% of time interval t2 and configured to handle 0% of the M.A.T for 60% of time interval t2. During the exemplary time interval t3, the N ports may combine to support up to 70% of the M.A.T. Accordingly, one or more components, or portions thereof, of the device may be configured to handle 100% of the M.A.T for 70% of time interval t3 and configured to handle 0% of the M.A.T for 30% of time interval t3. During the exemplary time interval t4, the N ports may combine to support up to 85% of the M.A.T. Accordingly, one or more components, or portions thereof, of the device may be configured to handle 100% of the M.A.T for 85% of time interval t4 and configured to handle 0% of the M.A.T for 15% of time interval t4. During the exemplary time interval t5, ports the N ports may combine to support up to 20% of the M.A.T. Accordingly, one or more components, or portions thereof, of the device may be configured to handle 100% of the M.A.T for 20% of time interval t5 and configured to handle 0% of the M.A.T for 80% of time interval t5.

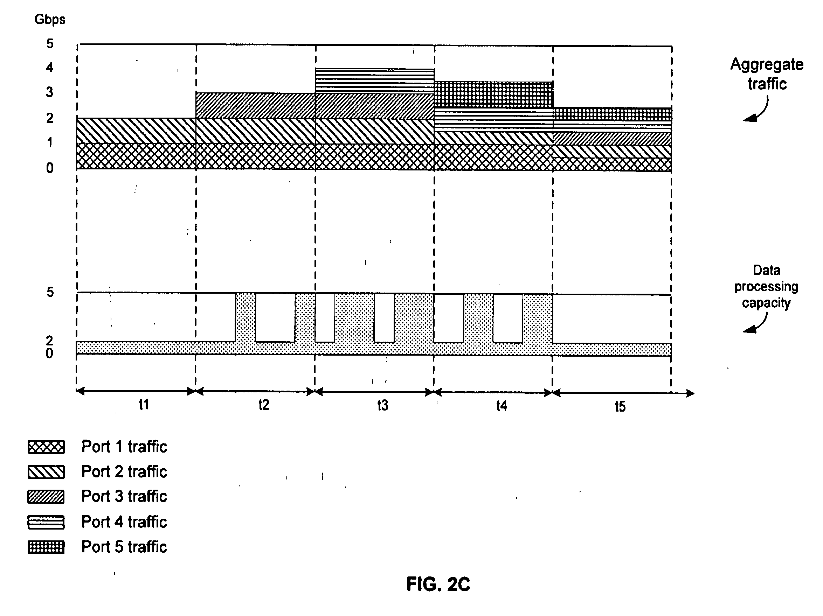

FIG. 2C is a diagram illustrating duty cycling one or more portions of a network device based on aggregate throughput of the device, in accordance with an embodiment of the invention. Referring to FIG. 2C, in an exemplary embodiment of the invention, a device may comprise five ports which may each operate at 1 Gbps full-duplex (corresponding to a M.A.T of 5 Gbps) or 500 Mbps full-duplex, where 500 Mbps may be a non-standard data rate supported by each of the five ports. In this regard, 1 Gbps and 500 Mbps are only exemplary data rates and the invention is not so limited. To prevent corrupted or lost data, from overflowed or underflowed buffers, for example, the rate at which the device processes data, that is, the device's data processing capacity, may need to keep up with the combined ingress and egress data on the five ports. Accordingly, an aggregate throughput of a device's network ports may be utilized to control operation of one or more portions of the device. In this regard, one or more components, or portions thereof, of the device may be duty cycled during a time interval based on the aggregate throughput of the device during the time interval.

During the exemplary time interval t1, ports 1 and 2 may be operating at 1 Gbps and ports 2 - 5 may be idle and possibly disconnected. Thus, the limit on aggregate throughput of the device during time interval t1 may be 2 Gbps. Accordingly, one or more components, or portions thereof, of the device may be configured to handle 2 Gbps aggregate throughput for 100% of time interval t1. During the exemplary time interval t2, ports 1 - 3 may be operating at 1 Gbps and ports 4 and 5 may be idle and possibly disconnected. Thus, the limit on aggregate throughput of the device during time interval t2 may be 3 Gbps. Accordingly, one or more components, or portions thereof, of the device may be configured to handle 2 Gbps for 66.6% of time interval t2 and configured to handle 5 Gbps aggregate throughput for 33.4% of time interval t2. During the exemplary time interval t3, ports 1 - 4 may be operating at 1 Gbps. Thus, the limit on aggregate throughput of the device during time interval t3 may be 4 Gbps. Accordingly, one or more components, or portions thereof, of the device may be configured to handle 2 Gbps for 33.4% of time interval t2 and configured to handle 5 Gbps aggregate throughput for 66.6% of time interval t3. During the exemplary time interval t4, ports 1, 4 and 5 may be operating at 1 Gbps and port 2 may be operating at 500 Mbps, which may be a non-standard data rate supported by the device. Thus, the limit on aggregate throughput of the device during time interval t3 may be 3.5 Gbps. Accordingly, one or more components, or portions thereof, of the device may be configured to handle 2 Gbps for 50% of time interval t4 and configured to handle 5 Gbps aggregate throughput for 50% of time interval t4. During the exemplary time interval t5, ports 1 through 5 may each be operating at 500 Mbps. Thus, the limit on aggregate throughput of the device during time interval t5 may be 2.5 Gbps. Accordingly, one or more components, or portions thereof, of the device may be configured to handle 2 Gbps for 83.3% of time interval t5 and configured to handle 5 Gbps aggregate throughput for 17.7% of time interval t5.

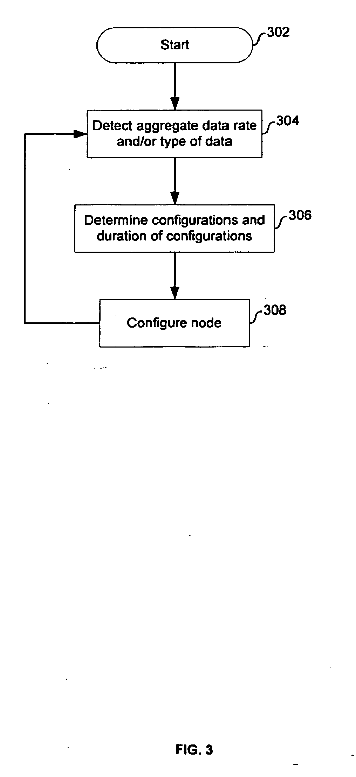

FIG. 3 is a flow chart illustrating exemplary steps for configuring a network device based on an aggregate throughput of the device, in accordance with an embodiment of the invention. For illustration, the exemplary steps are described with reference to the N-port device 100. Referring to FIG. 3, subsequent to start step 302 the exemplary steps may advance to step 304. In step 304, a limit on the aggregate throughput of the links 112₁, ..., 112_{N} during the time interval t1 may be determined. In this regard, a limit on the aggregate throughput of the links 112₁, ..., 112_{N} may be less than the maximum aggregate throughput supported by the device 100 for a variety of reasons. For example, one or more of the networking port subsystems 108 may not be connected to a network device 113, or may operate at a less than maximum speed due to limitations of a device 114 with which it is communicatively coupled. Additionally or alternatively, the data rate may be limited due to power requirements and/or a desire to conserve energy. In this regard, one or more techniques referred to as "Energy Efficient Ethernet" may be utilized to manage power consumption of the device 100 and may result in communications at less than a maximum supported data rate. For example, various variations of "low power IDLE" and/or "subset PHY" may be utilized. Subsequent to step 304, the exemplary steps may advance to step 306.

In step 306, duty cycling parameters may be determined. Exemplary parameters may comprise: which portions of the device 100 may be configured, which configuration(s) may be utilized, when one or more configurations may be utilized, and how long one or more configurations may be utilized. In this regard, various duty cycling parameters may be configured so as achieve desired data processing capacity(ies) and to prevent lost, corrupted, and/or critically delayed data. In some embodiments of the invention, a type of data may be considered or determined so as to, for example, mitigate the effects of latency. In some embodiments of the invention, a capacity of one or more memory elements utilized to, for example, buffer ingress and egress traffic at the device 100 may be taken into consideration when determining duty cycling parameters. In this regard, parameters for duty cycling the device 100 may be determined so as to prevent overflowing and/or underflowing buffers. Subsequent to step 306, the exemplary steps may advance to step 308.

In step 308, duty cycling of the device utilizing the parameters determined in step 306 may be implemented. In this regard, in order to prevent lost and/or corrupted data, a time instant at which to implement the new duty cycling parameters may be determined, and the device may be reconfigured at the determined time instant. Subsequent to step 308, the exemplary steps may return to step 304 and operate utilizing the parameters determined in step 306 until the completion of time interval t1 and/or t2.

Exemplary aspects of a method and system for duty cycling a network device based on aggregate throughput of the device are provided. In an exemplary embodiment of the invention, a limit on aggregate ingress and/or egress data of the network device 200 during a time interval may be determined. Processing of the data may be duty cycled based on the determination. The device 200 may process the data at a first rate during a first portion of a time interval and process the data at a second rate during a remaining portion of the time interval. In this regard, one or more components, or portions thereof, of the device 200 may be slowed or powered down during the first portion of the time interval. Exemplary components of the device 200 may comprise one or more network port subsystems 108, switch fabric subsystems 102, control and/or management subsystems 104, and/or hosts 152. In some embodiments of the invention, the device 100 may communicate utilizing Ethernet protocols. Additionally, power consumption of the device 100 may be managed utilizing one or more Energy Efficient Ethernet techniques such as "low power idle" and/or "subset PHY".

A duration of the time interval may be based on a type of the ingress and egress data. A duration of the time interval may be based on the limit on aggregate ingress and/or egress data of the network device 200 during the time interval. A duration of the first portion of the time interval may be based on the limit on aggregate ingress and/or egress data of the network device 200 during the time interval. Power consumed by the device during the first portion of the time interval may be less than power consumed by the device during the remaining portion of the time interval. The first data rate and the second data rate may each be determined based on the limit on aggregate ingress and/or egress data of the network device 200 during the time interval. An average rate at which the device processes data during the time interval may be equal, within a tolerance, limit on aggregate ingress and/or egress data of the network device 200 during said time interval.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for duty cycling a network device based on aggregate throughput of the device.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for networking, the method comprising:
determining (304) a limit on an aggregate throughput of ingress and/or egress data of a network device during a time interval;
configuring a network device based on said determination according to one or more configurations comprising:
determining at least one duty cycling parameter comprising which portions of the network device are to be configured, which one of the one or more configurations are to be utilized, when the one or more configurations are to be utilized, and how long the one or more configurations are to be utilized;
configuring said at least one duty cycling parameter; and
duty cycling processing of said ingress and/or egress data by said network device according to said at least one duty cycling parameter.

2. The method according to claim 1, comprising powering down and/or slowing down one or more components, or portions thereof, of said network device during a portion of said time interval.

3. The method according to claim 1, comprising processing by said network device, said ingress and/or egress data at a first rate during a first portion of said time interval and at a second rate during a remaining portion of said time interval.

4. The method according to claim 3, comprising determining a duration of said time interval, said first portion of said time interval, and/or said remaining portion of said time interval based on one or more of:
a type of said ingress and/or egress data; and
said limit on the aggregate throughput of the ingress and/or egress data of said network device during said time interval.

5. The method according to claim 3, wherein power consumed by said network device during said first portion of said time interval is less than power consumed by said network device during said remaining portion of said time interval.

6. The method according to claim 3, comprising determining said first rate and said second rate based on said limit on the aggregate throughput of the ingress and/or egress data of said network device during said time interval.

7. The method according to claim 6, wherein an average rate at which said network device processes said ingress and/or egress data during said time interval is equal, within a tolerance, to said limit on the aggregate throughput of ingress and/or egress data of said network device during said time interval.

8. A system for networking, the system comprising:
a network device (100, 150) comprising one or more circuits (104, 152), said, one or more circuits (104, 152) adapted to:
determine a limit on an aggregate throughput of ingress and/or egress data of said network device (100, 150) during a time interval;
configure the network device (100, 150) based on said determination according to one or more configurations comprising:
determine at least one duty cycling parameter comprising which portions of the network device (100, 150) are to be configured, which one of the one or more configurations are to be utilized, when the one or more configurations be utilized, and how long the one or more configurations are to be utilized;
configure said at least one duty cycling parameter; and
duty cycle processing of said ingress and/or egress data by said network device (100, 150) according to said at least one duty cycling parameter.

9. The system according to claim 8, wherein said one or more circuits (104, 152) are operable to power down and/or slow down one or more components, or portions thereof, of said network device (100, 150) during a portion of said time interval.

10. The system according to claim 8, wherein said one or more circuits (104, 152) are operable to process said ingress and/or egress data at a first rate during a first portion of said time interval and process said ingress and/or egress data at a second rate during said remaining portion of said time interval.

## Patentansprüche

1. Verfahren zur Vernetzung, wobei das Verfahren umfasst:
Bestimmen (304) einer Grenze eines Gesamtdurchsatzes von Eingangs- und/oder Ausgangsdaten einer Netzwerkvorrichtung während eines Zeitintervalls;
Konfigurieren einer Netzwerkvorrichtung basierend auf dem Bestimmen gemäß einer oder mehreren Konfigurationen, mit:
Bestimmen wenigstens eines Arbeitszyklusparameters umfassend welche Teile der Netzwerkvorrichtung zu konfigurieren sind, welche der einen oder der mehreren Konfigurationen zu verwenden sind, wann die eine oder die mehreren Konfigurationen zu verwenden sind, und wie lange die eine oder die mehreren Konfigurationen zu verwenden sind;
Konfigurieren des wenigstens einen Arbeitszyklusparameters; und
Arbeitszyklusverarbeitung der Eingangs- und/oder Ausgangsdaten durch die Netzwerkvorrichtung gemäß dem wenigstens einen Arbeitszyklusparameter.

2. Verfahren nach Anspruch 1, das das Abschalten und/oder Verlangsamen eines oder mehrerer Komponenten, oder Teile davon, der Netzwerkvorrichtung während eines Teils des Zeitintervalls umfasst.

3. Verfahren nach Anspruch 1, das das Verarbeiten der Eingangs- und/oder Ausgangsdaten durch die Netzwerkvorrichtung mit einer ersten Rate während eines ersten Teils des Zeitintervalls und einer zweiten Rate während eines verbleibenden Teils des Zeitintervalls umfasst.

4. Verfahren nach Anspruch 3, das das Bestimmen der Dauer des Zeitintervalls umfasst, wobei der erste Teil des Zeitintervalls und/oder der verbleibende Teil des Zeitintervalls auf einem oder mehreren basiert von:
der Art der Eingangs- und/oder Ausgangsdaten; und
der Grenze des Gesamtdurchsatzes der Eingangs- und/oder Ausgangsdaten der Netzwerkvorrichtung während des Zeitintervalls.

5. Verfahren nach Anspruch 3, wobei die von der Netzwerkvorrichtung während des ersten Teils des Zeitintervalls verbrauchte Energie geringer ist, als die von der Netzwerkvorrichtung während des verbleibenden Teils des Zeitintervalls verbrauchte Energie.

6. Verfahren nach Anspruch 3, das das Bestimmen der ersten Rate und der zweiten Rate basierend auf der Grenze des Gesamtdurchsatzes der Eingangs- und/oder Ausgangsdaten der Netzwerkvorrichtung während des Zeitintervalls umfasst.

7. Verfahren nach Anspruch 6, wobei eine Durchschnittsrate, mit der die Netzwerkvorrichtung die Eingangs- und/oder Ausgangsdaten während des Zeitintervalls verarbeitet, innerhalb einer Toleranz gleich der Grenze des Gesamtdurchsatzes der Eingangs- und/oder Ausgangsdaten der Netzwerkvorrichtung während des Zeitintervalls ist.

8. System zur Vernetzung, wobei das System aufweist:
eine Netzwerkvorrichtung (100, 150) mit einer oder mehreren Schaltungen (104, 152), wobei die eine oder die mehreren Schaltungen dazu ausgelegt sind:
eine Grenze eines Gesamtdurchsatzes von Eingangs- und/oder Ausgangsdaten der Netzwerkvorrichtung (100, 150) während eines Zeitintervalls zu bestimmen;
die Netzwerkvorrichtung (100, 150) basierend auf dem Bestimmen gemäß einer oder mehreren Konfigurationen zu konfigurieren, mit:
Bestimmen wenigstens eines Arbeitszyklusparameters umfassend welche Teile der Netzwerkvorrichtung (100, 150) zu konfigurieren sind, welche der einen oder der mehreren Konfigurationen zu verwenden sind, wann die eine oder die mehreren Konfigurationen zu verwenden sind, und wie lange die eine oder die mehreren Konfigurationen zu verwenden sind;
Konfigurieren des wenigstens einen Arbeitszyklusparameters; und
Arbeitszyklusverarbeitung der Eingangs- und/oder Ausgangsdaten durch die Netzwerkvorrichtung (100, 150) gemäß dem wenigstens einen Arbeitszyklusparameter.

9. System nach Anspruch 8, wobei die eine oder die mehreren Schaltungen (104, 152) so betreibbar sind, dass sie eine oder mehrere Komponenten, oder Teile davon, der Netzwerkvorrichtung (100, 150) während eines Teils des Zeitintervalls ausschalten und/oder verlangsamen.

10. System nach Anspruch 8, wobei die eine oder die mehreren Schaltungen (104, 152) so betreibbar sind, dass sie die Eingangs- und/oder Ausgangsdaten während eines ersten Teils des Zeitintervalls mit einer ersten Rate verarbeiten und die Eingangs- und/oder Ausgangsdaten während des verbleibenden Teils des Zeitintervalls mit einer zweiten Rate verarbeiten.

## Revendications

1. Procédé de mise en réseau, le procédé comprenant :
la détermination (304) d'une limite sur un débit global de données d'entrée et/ou de sortie d'un dispositif de réseau pendant un intervalle de temps ;
la configuration d'un dispositif de réseau sur la base de ladite détermination selon une ou plusieurs configuration(s) comprenant :
la détermination d'au moins un paramètre de cyclage de service comprenant quelles parties du dispositif de réseau doivent être configurées, laquelle parmi l'une ou les plusieurs configuration(s) doit être utilisée, quand l'une ou les plusieurs configuration(s) doit/doivent être utilisée(s), et combien de temps l'une ou les plusieurs configuration(s) doit/doivent être utilisée(s) ;
la configuration dudit au moins un paramètre de cyclage de service ; et
un traitement de cyclage de service desdites données d'entrée et/ou de sortie par ledit dispositif de réseau en fonction dudit au moins un paramètre de cyclage de service.

2. Procédé selon la revendication 1, comprenant une réduction de puissance et/ou un ralentissement d'un ou plusieurs composant(s), ou de parties de ceux-ci, dudit dispositif de réseau pendant une partie dudit intervalle de temps.

3. Procédé selon la revendication 1, comprenant un traitement par ledit dispositif de réseau desdites données d'entrée et/ou de sortie à un premier débit pendant une première partie dudit intervalle de temps et à un deuxième débit pendant une partie restante dudit intervalle de temps.

4. Procédé selon la revendication 3, comprenant la détermination d'une durée dudit intervalle de temps, de ladite première partie dudit intervalle de temps, et/ou de ladite partie restante dudit intervalle de temps sur la base d'un ou plusieurs parmi :
un type desdites données d'entrée et/ou de sortie ; et
ladite limite sur le débit global des données d'entrée et/ou de sortie dudit dispositif de réseau pendant ledit intervalle de temps.

5. Procédé selon la revendication 3, dans lequel l'énergie consommée par ledit dispositif de réseau pendant ladite première partie dudit intervalle de temps est inférieure à une énergie consommée par ledit dispositif de réseau pendant ladite partie restante dudit intervalle de temps.

6. Procédé selon la revendication 3, comprenant la détermination dudit premier débit et dudit deuxième débit sur la base de ladite limite sur le débit global des données d'entrée et/ou de sortie dudit dispositif de réseau pendant ledit intervalle de temps.

7. Procédé selon la revendication 6, dans lequel un débit moyen auquel ledit dispositif de réseau traite lesdites données d'entrée et/ou de sortie pendant ledit intervalle de temps est égal, à l'intérieur d'une certaine tolérance, à ladite limite sur le débit global des données d'entrée et/ou de sortie dudit dispositif de réseau pendant ledit intervalle de temps.

8. Système de mise en réseau, le système comprenant :
un dispositif de réseau (100, 150) comprenant un ou plusieurs circuit(s) (104, 152), ledit un ou lesdits plusieurs circuit(s) (104, 152) adapté(s) à :
déterminer une limite sur un débit global de données d'entrée et/ou de sortie dudit dispositif de réseau (100, 150) pendant un intervalle de temps ;
configurer le dispositif de réseau (100, 150) sur la base de ladite détermination selon une ou plusieurs configuration(s) comprenant :
la détermination d'au moins un paramètre de cyclage de service comprenant quelles parties du dispositif de réseau (100, 150) doivent être configurées, laquelle parmi l'une ou les plusieurs configuration(s) doit être utilisée, quand l'une ou les plusieurs configuration(s) doit/doivent être utilisée(s), et combien de temps l'une ou les plusieurs configuration(s) doit/doivent être utilisée(s) ;
la configuration dudit au moins un paramètre de cyclage de service ; et
un traitement de cycle de service desdites données d'entrée et/ou de sortie par ledit dispositif de réseau (100, 150) en fonction dudit au moins un paramètre de cyclage de service.

9. Système selon la revendication 8, dans lequel ledit un ou lesdits plusieurs circuit(s) (104, 152) est/sont utilisable(s) pour réduire la puissance de et/ou ralentir un ou plusieurs composant(s), ou parties de ceux-ci, dudit dispositif de réseau (100, 150) pendant une partie dudit intervalle de temps.

10. Système selon la revendication 8, dans lequel ledit un ou lesdits plusieurs circuit(s) (104, 152) est/sont utilisable(s) pour traiter lesdites données d'entrée et/ou de sortie à un premier débit pendant une première partie dudit intervalle de temps et traiter lesdites données d'entrée et/ou de sortie à un deuxième débit pendant ladite partie restante dudit intervalle de temps.
